(19) Europäisches Patentamt / European Patent Office / Office européen des brevets

(11) **EP 2 279 399 B1**

(12) **EUROPÄISCHE PATENTSCHRIFT**

(45) Veröffentlichungstag und Bekanntmachung des Hinweises auf die Patenterteilung:
**02.01.2013 Patentblatt 2013/01**

(21) Anmeldenummer: **09737518.2**

(22) Anmeldetag: **28.04.2009**

(51) Int Cl.:
**G01L 27/00** (2006.01)

(86) Internationale Anmeldenummer:
**PCT/AT2009/000171**

(87) Internationale Veröffentlichungsnummer:
**WO 2009/132366 (05.11.2009 Gazette 2009/45)**

(54) **ANLAGE UND VERFAHREN ZUR AUSFALLSERKENNUNG EINES DRUCKSENSORS**

SYSTEM AND METHOD FOR FAILURE RECOGNITION OF A PRESSURE SENSOR

SYSTÈME ET PROCÉDÉ POUR DÉTECTER UNE DÉFAILLANCE D'UN CAPTEUR DE PRESSION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.04.2008 AT 6782008**

(43) Veröffentlichungstag der Anmeldung:
**02.02.2011 Patentblatt 2011/05**

(73) Patentinhaber: **OnO Oil GmbH**
**6020 Innsbruck (AT)**

(72) Erfinder:
• **BRUNNER, Alexander**
  **A-1080 Wien (AT)**
• **WERTH, Peter**
  **85098 Grossmehring (DE)**

(74) Vertreter: **Weiser, Andreas**
**Patentanwalt**
**Kopfgasse 7**
**1130 Wien (AT)**

(56) Entgegenhaltungen:
DE-A1- 4 216 937    US-A- 2 510 402
US-A1- 2006 142 931    US-A1- 2007 113 623

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Anlage zur Ausfallserkennung eines Drucksensors, der zur Drucküberwachung eines geschlossenen Raums dient und ein Verlassen eines vorgegebenen Druckbereichs anzeigt, mit einer Auswerteeinrichtung für das Druckmeßsignal des Drucksensors. Die Erfindung betrifft ferner ein Verfahren für eine solche Ausfallserkennung.

Drucksensoren für geschlossene Räume dienen häufig als Sicherheitseinrichtungen, beispielsweise zur Drucküberwachung des Doppelwand-Zwischenraums von doppelwandigen Tanks, zur Drucküberwachung von flüssigkeitsgekühlten Gerätegehäusen usw. Bei solchen Sicherheitsanwendungen befindet sich der Drucksensor für lange Zeit, d.h. solange kein Über- oder Unterdruckalarm abzugeben ist, üblicherweise in Ruhestellung und es ist nicht erkennbar, ob der Drucksensor für den Ernstfall noch funktionsfähig oder bereits ausgefallen ist. Eine regelmäßige Überprüfung der Funktionsbereitschaft des Drucksensors ist daher sicherheitsentscheidend, was bislang aufwendig durch Begehungen vor Ort oder periodische Tests durchgeführt werden muß. Darüberhinaus birgt dies die Gefahr in sich, einen zwischen den Oberprüfungsintervallen auftretenden Ausfall nicht sofort zu erkenne Eine Funktionsprüfung einer Sicherheitseinrichtung wird in

DE 42 16 937 offenbart.

Die Erfindung setzt sich zum Ziel, eine Anlage und ein Verfahren zur Ausfallserkennung eines Drucksensors zu schaffen, welche die geschilderten Nachteile überwinden und eine ständige Ausfallsüberwachung von in Sicherheitsbereitschaft stehenden Drucksensoren ermöglichen.

Dieses Ziel wird in einem ersten Aspekt der Erfindung mit einer Anlage der einleitend genannten Art erreicht, die sich dadurch auszeichnet, daß die Auswerteeinrichtung einen Ausfall des Drucksensors anzeigt, wenn das Druckmeßsignal innerhalb des genannten Druckbereichs keine tagesperiodische Druckschwankung aufweist.

Die Erfindung beruht auf der Erkenntnis, daß der Druck in einem geschlossenen Raum stets einer kleinen, tagesperiodischen Druckschwankung unterliegt, welche auf den Einfluß des natürlichen Umgebungsklimas zurückzuführen ist, u.zw. genauer die unterschiedliche Tag-Nacht-Erwärmung durch die wechselnde Sonneneinstrahlung. Diese geringfügigen Temperaturschwankungen führen zu korrespondierenden geringfügigen Druckschwankungen innerhalb des Raumes im Tagesverlauf, welche nach den Prinzipien der vorliegenden Erfindung als Kriterium für die Funktionsfähigkeit des Drucksensors herangezogen werden: Das Ausbleiben einer tagesperiodischen Schwankung im Druckmeßsignal des Drucksensors zeigt unmittelbar einen Ausfall des Drucksensors an, sodaß sofort Gegenmaßnahmen getroffen werden können. Im Ergebnis ermöglicht dies eine kontinuierliche Ausfallserkennung von Drucksensoren, selbst wenn diese über lange Zeit in bloßer Auslösebereitschaft ("Ruhestellung") stehen. Die Ausfallerkennung ist auch von einem weit entfernten Ort aus möglich, denn es ist dazu lediglich das Druckmeßsignal erforderlich, welches signaltechnische fernüberwacht werden kann.

Gemäß einer bevorzugten Ausführungsform der Erfindung zeigt die Auswerteeinrichtung auch dann einen Ausfall des Drucksensors an, wenn das Druckmeßsignal eine tagesperiodische Druckschwankung aufweist, die unter einem vorgegebenen Schwellwert liegt. Dadurch kann der Einfluß von Meßwandlertoleranzen im Drucksensor reduziert werden; darüber hinaus kann damit ein nahender Ausfall des Drucksensors erkannt werden, wenn sich dieser durch eine sukzessive Verringerung seiner Meßempfindlichkeit ankündigt.

Eine weitere bevorzugte Ausführungsform der Erfindung zeichnet sich dadurch aus, daß die Anlage ein Barometer aufweist, welches Änderungen des Atmosphärendrucks außerhalb des Raumes mißt und an die Auswerteeinrichtung angeschlossen ist, und die Auswerteeinrichtung das Druckmeßsignal vor der genannten Auswertung um atmosphärendruckbedingte Druckänderungen bereinigt. Dadurch kann der Einfluß von klimatischen Luftdruckschwankungen kompensiert werden, sodaß die gemessenen Druckschwankungen im wesentlichen nur mehr auf die tagesperiodischen Temperaturschwankungen im Rauminneren zurückzuführen sind, welche durch die wechselnde Sonneneinstrahlung im Tagesverlauf bedingt sind.

Gemäß einem weiteren bevorzugten Merkmal der Erfindung weist die Anlage ferner ein Hygrometer auf, welches Änderungen des Feuchtigkeitsgehalts im Raum mißt und an die Auswerteeinrichtung angeschlossen ist, und die Auswerteeinrichtung bereinigt das Druckmeßsignal vor der genannten Auswertung um feuchtigkeitsgehaltbedingte Druckänderungen, sodaß auch diese Einflüsse kompensiert werden können.

Für den bevorzugten Anwendungsfall von Drucksensoren, die als Raum den Doppelwand-Zwischenraum eines doppelwandigen Tanks überwachen, ist es besonders günstig, wenn die Anlage gemäß einem weiteren bevorzugten Merkmal einen Füllstandsensor für den Tank aufweist, welcher an die Auswerteeinrichtung angeschlossen ist, und die Auswerteeinrichtung das Druckmeßsignal vor der genannten Auswertung um füllstandsbedingte Druckänderungen bereinigt. Dadurch können auch Störeinflüsse, die auf Dehnungen der inneren Tankwand der Doppelwand wegen wechselnden Füllstandes auftreten, kompensiert werden.

In einem zweiten Aspekt schafft die Erfindung ein Verfahren zur Ausfallserkennung der eingangs genannten Art, welches sich dadurch auszeichnet, daß fortlaufend überprüft wird, ob das Druckmeßsignal des Drucksensors innerhalb des genannten Druckbereichs eine tagesperiodische Druckschwankung aufweist, und ein Ausfall des Drucksensors erkannt wird, wenn keine tagesperiodische Druckschwankung mehr feststellbar ist. Hinsichtlich der Vorteile des erfindungsgemäßen Verfahrens wird auf die obigen Ausführungen zur Anlage verwiesen.

Bevorzugt wird ein Ausfall des Drucksensors bereits dann erkannt, wenn die tagesperiodische Druckschwankung unter einen vorgegebenen Schwellwert fällt; und besonders bevorzugt wird als Schwellwert ein Bruchteil des Mittelwerts mehrerer vorangegangener tagesperiodischer Druckschwankungen festgesetzt. Dadurch kann ein weitgehend automatisiertes Verfahren geschaffen werden, dessen Auslösekriterium für die Ausfallserkennung keiner manuellen Einstellung bedarf, sondern sich anlagenspezifisch selbsttätig einstellt.

Weitere Merkmale und Vorteile der Erfindung ergeben sich aus der nachstehenden Beschreibung eines bevorzugten Ausführungsbeispieles anhand der beigeschlossenen Zeichnungen, in denen zeigt:

Fig. 1 die Anlage der Erfindung in schematischer Blockschaltbildform;
Fig. 2 drei jahreszeitentypische Druckschwankungsverläufe in einem geschlossenen Raum, welcher dem natürlichen Umgebungsklima ausgesetzt ist; und
Fig. 3 ein beispielhaftes tagesperiodisches Druckmeßsignal des Drucksensors von Fig. 1.

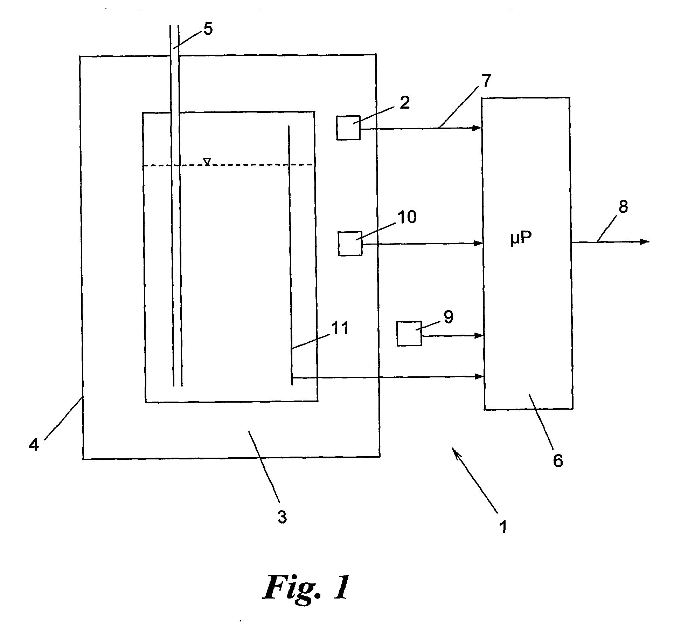

Fig. 1 zeigt eine Anlage 1 zur Erkennung eines Ausfalles eines Drucksensors 2, welcher zur Drucküberwachung eines geschlossenen Raumes 3 dient. Der geschlossene Raum 3 ist im gezeigten Beispiel der Doppelwand-Zwischenraum eines doppelwandigen Tanks 4, wie er beispielsweise bei Tankstellen als unterirdischer Kraftstofftank Anwendung findet und über eine Entnahmeleitung 5 verfügt. Der Raum 3 wird beispielsweise mit Überdruck beaufschlagt, um im Falle eines Lecks der Innenwand des Tanks 4 ein Austreten von Kraftstoff zu verhindern. Bei anderen Anwendungsfällen wird der Raum 3 alternativ auf einen vorgegebenen Unterdruck evakuiert, um im Falle eines Lecks der Innenwand ein Eintreten von Luft in den Tank 4 zu verhindern. In jedem Fall wird mit Hilfe des Drucksensors 2 die Einhaltung eines vorgegebenen Druckbereichs überwacht, d.h. der Drucksensor 2 löst bei einem Verlassen dieses Druckbereichs, z.B. einem Unterschreiten eines Mindestdrucks eines druckbeaufschlagten Raumes oder einem Überschreiten eines Höchstdrucks eines evakuierten Raumes, wie es bei einem Leck in der Innen- oder Außenwand des Tanks auftreten kann, einen entsprechenden Alarm aus. Dazu dient im gezeigten Beispiel eine Auswerteeinrichtung 6, welche über eine Datenverbindung 7 das Druckmeßsignal des Drucksensors 2 empfängt und auf einer Ausgangsleitung 8 einen Alarm ausgeben kann.

Die Anlage 1 ist ferner mit einem Barometer 9 außerhalb des Tanks 4, einem Hygrometer 10 im Raum 3 sowie einem Füllstandsensor 11 im Tankinneren ausgestattet, welche Komponenten ebenfalls an die Auswerteeinrichtung 6 angeschlossen sind und deren Funktion später ausführlicher erläutert wird.

Zur ständigen Überprüfung der Funktionsbereitschaft und damit Erkennung eines Ausfalls des Drucksensors 2 dient das folgende Verfahren, welches von der Auswerteeinrichtung 6 abgearbeitet wird.

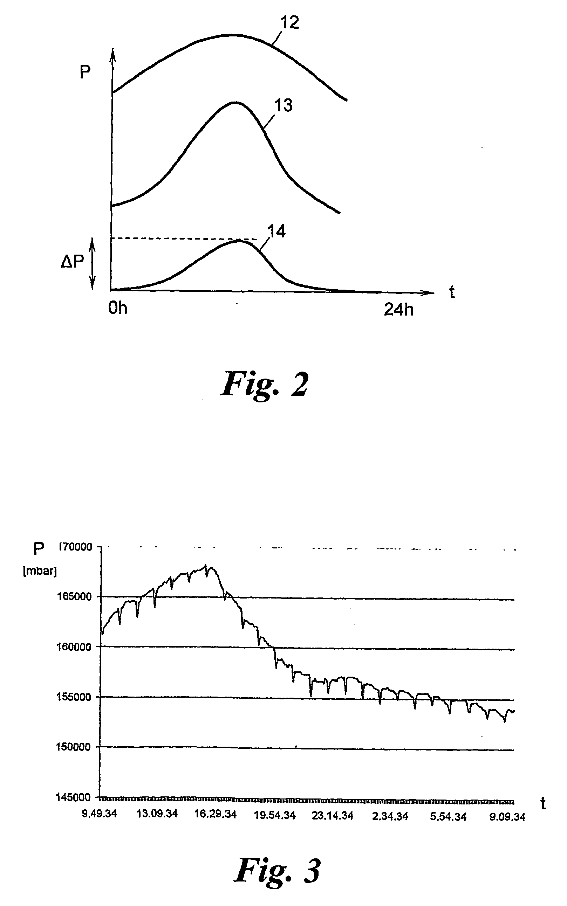

Aufgrund der im Tagesverlauf wechselnden Sonneneinstrahlung auf den Tank 4, welche zu einer entsprechenden tagesperiodischen Temperaturschwankung der Gase im Raum 3 führt, tritt im Raum 3 eine dementsprechende tagesperiodische Druckschwankung $\Delta P$ auf, die in Fig. 2 schematisch gezeigt ist und für unterschiedliche Jahreszeiten unterschiedlich stark ausfällt: Kurve 12 zeigt die tagesperiodische Druckschwankung im Raum 3 an einem typischen Sommertag, Kurve 13 an einem typischen Frühlings- oder Herbsttag und Kurve 14 an einem typischen Wintertag. Es ist ersichtlich, daß die größte tagesperiodische Druckschwankungen $\Delta P$ im Frühling bzw. Herbst auftritt. In jedem Fall ist die tagesperiodische Druckschwankung $\Delta P$ in der Regel sehr klein (in Fig. 2 übertrieben dargestellt) und liegt stets innerhalb des vom Drucksensor 2 zu Alarmzwecken zu überwachenden Druckbereichs.

Das Auftreten der tagesperiodischen Druckschwankung $\Delta P$ im Druckmeßsignal des Drucksensors 2 wird von der Auswerteeinrichtung 6 kontinuierlich, beispielsweise einmal pro Tag für die vorangegangenen 24h, festgestellt. Fig. 3 zeigt ein beispielhaftes Druckmeßsignal, das von der Auswerteeinrichtung 6 über die Datenverbindung 7 vom Drucksensor 2 im Zeitraum von 09 h 49 min 34 s bis 09 h 09 min 34 s des Folgetages empfangen wurde und einen etwa der Kurve 14 von Fig. 2 entsprechenden Verlauf zeigt.

Sobald die Auswerteeinrichtung 6 bei ihrer fortlaufenden Überprüfung feststellt, daß das Druckmeßsignal innerhalb der letzten 24h keine tagesperiodische Druckschwankung aufwies, zeigt sie einen Ausfall des Drucksensors 2 an, beispielsweise durch Abgabe eines entsprechenden Ausfallalarmes auf der Ausgangsleitung 8.

Das Erkennen des Vorliegens einer tagesperiodischen Druckschwankung im Druckmeßsignal kann mit Hilfe jedes beliebigen in der Technik bekannten Signalauswertungsverfahrens vorgenommen werden, beispielsweise durch Frequenzanalyse, Mustererkennung od.dgl. Im einfachsten Fall genügt es, die Differenz zwischen maximalem und minimalem Druckmeßwert eines Tages zu ermitteln, d.h. die Amplitude $\Delta P$ der tagesperiodischen Druckschwankung, und festzustellen, ob diese Null ist oder zumindest einen vorgegebenen Schwellwert unterschreitet, d.h. das Kriterium ist:

$$\Delta P = |p_{max24h} - p_{max24h}| \leq S \ ?$$

mit

|  |  |
|---|---|
| Pmax24h ............ | maximaler Druckmeßwert der letzten 24 Stunden |
| $P_{min24h}$ ............ | minimaler Druckmeßwert der letzten 24 Stunden |
| S ........................ | vorgegebener Schwellwert |

Wenn der Schwellwert S Null ist, wird auf einen Ausfall erkannt, wenn keine tagesperiodische Druckschwankung $\Delta P$ vorliegt; wenn S größer als Null ist, wird auf einen Ausfall erkannt, wenn die tagesperiodische Druckschwankung $\Delta P$ den Schwellwert unterschreitet.

Bevorzugt wird der Schwellwert S auf einen vorgegebenen Bruchteil, z.B. 1/10, des Mittelwertes $\Delta P_{mittel}$ mehrerer vorangegangener tagesperiodischer Druckschwankungen $\Delta P$ festgesetzt, d.h.

$$S = \Delta P_{mittel}/10$$

Der Druckmeßwert des Drucksensors 2 kann von der Auswerteeinrichtung 6 vor der obengenannten Auswertung optional um Schwankungen des atmosphärischen Umgebungsdrucks bereinigt werden, welche mittels des Barometers 9 gemessen werden können.

Auch Änderungen des Feuchtigkeitsgehalts der Gase im Raum 3, die einen störenden Einfluß auf den Druckmeßwert haben können, können optional mittels des Hygrometers 10 gemessen und von der Auswerteeinrichtung 6 unter Heranziehung der in der Technik bekannten Gasgleichungen kompensiert werden.

Schließlich kann auch der Füllstand im Tank 4 die Druckmeßwerte des Drucksensors 2 verfälschen, wenn sich beispielsweise die Innenwand des Tanks 4 je nach Füllstands des Tanks ausdehnt. Mittels des Füllstandsensors 11 kann daher optional der Füllstand des Tanks 4 gemessen und das Druckmeßsignal des Drucksensors 2 von der Auswerteeinrichtung 6 um füllstandsbedingten Druckänderungen bereinigt werden.

Die Anlage und das Verfahren der Erfindung eignen sich zur Ausfallserkennung aller Arten von Drucksensoren, welche den Druck eines geschlossenen Raumes überwachen, der zumindest indirekt dem Einfluß des Umgebungsklimas und damit Temperaturänderungen im Tagesverlauf unterliegt, z.B. auch von Sicherheits-Drucksensoren für flüssigkeitsgekühlte Freiland-Transformatorstationen.

Die Erfindung ist demgemäß nicht auf die dargestellten Ausführungsbeispiele beschränkt, sondern umfaßt alle Varianten und Modifikationen, die in den Rahmen der angeschlossenen Ansprüche fallen.

**Patentansprüche**

1. Anlage (1) zur Ausfallserkennung eines Drucksensors (2), der zur Drucküberwachung eines geschlossenen Raums (3) dient und ein Verlassen eines vorgegebenen Druckbereichs anzeigt, mit einer Auswerteeinrichtung für das Druckmeßsignal des Drucksensors, **dadurch gekennzeichnet, daß** die Auswerteeinrichtung (6) einen Ausfall des Drucksensors (2) anzeigt, wenn das Druckmeßsignal innerhalb des genannten Druckbereichs keine tagesperiodische Druckschwankung ($\Delta P$) aufweist.

2. Anlage nach Anspruch 1, **dadurch gekennzeichnet, daß** die Auswerteeinrichtung (6) auch dann einen Ausfall des Drucksensors (2) anzeigt, wenn das Druckmeßsignal eine tagesperiodische Druckschwankung ($\Delta P$) aufweist, die unter einem vorgegebenen Schwellwert (S) liegt.

3. Anlage nach Anspruch 1 oder 2, **dadurch gekennzeichnet, daß** sie ein Barometer (9) aufweist, welches Änderungen des Atmosphärendrucks außerhalb des Raumes (3) mißt und an die Auswerteeinrichtung (6) angeschlossen ist, und daß die Auswerteeinrichtung (6) das Druckmeßsignal vor der genannten Auswertung um atmosphärendruckbedingte Druckänderungen bereinigt.

4. Anlage nach einem der Ansprüche 1 bis 3, **dadurch gekennzeichnet, daß** sie ein Hygrometer (10) aufweist, welches Änderungen des Feuchtigkeitsgehalts im Raum (3) mißt und an die Auswerteeinrichtung (6) angeschlossen ist, und daß die Auswerteeinrichtung (6) das Druckmeßsignal vor der genannten Auswertung um feuchtigkeitsgehaltbedingte Druckänderungen bereinigt.

5. Anlage nach einem der Ansprüche 1 bis 4 für einen Drucksensor (2), der als Raum (3) den Doppelwand-Zwischenraum eines doppelwandigen Tanks (4) überwacht, **dadurch gekennzeichnet, daß** sie einen Füllstandsensor (11) für den Tank (4) aufweist, welcher an die Auswerteeinrichtung (6) angeschlossen ist, und daß die Auswerteeinrichtung (6) das Druckmeßsignal vor der genannten Auswertung um füllstandsbedingte Druckänderungen bereinigt.

6. Verfahren zur Ausfallserkennung eines Drucksensors, der zur Drucküberwachung eines geschlossenen Raums dient und ein Verlassen eines vorgegebenen Druckbereichs anzeigt, **dadurch gekennzeichnet, daß** fortlaufend überprüft wird, ob das Druckmeßsignal des Drucksensors (2) innerhalb des genannten Druckbereichs eine tagesperiodische Druckschwankung ($\Delta P$) aufweist, und ein Ausfall des Drucksensors (2) erkannt wird, wenn keine tagesperiodische Druckschwankung ($\Delta P$) mehr feststellbar ist.

7. Verfahren nach Anspruch 6, **dadurch gekennzeichnet, daß** ein Ausfall des Drucksensors (2) bereits dann erkannt wird, wenn die tagesperiodische Druckschwankung ($\Delta P$) unter einen vorgegebenen Schwellwert (S) fällt.

8. Verfahren nach Anspruch 7, **dadurch gekennzeichnet, daß** als Schwellwert (S) ein Bruchteil des Mittelwerts mehrerer vorangegangener tagesperiodischer Druckschwankungen festgesetzt wird.

9. Verfahren nach einem der Ansprüche 6 bis 8, **dadurch gekennzeichnet, daß** das Druckmeßsignal vor der genannten Überprüfung um atmosphärendruckbedingte Druckänderungen bereinigt wird, die mittels eines Barometers (9) außerhalb des Raums (3) gemessen werden.

10. Verfahren nach einem der Ansprüche 6 bis 9, **dadurch gekennzeichnet, daß** das Druckmeßsignal vor der genannten Überprüfung um feuchtigkeitsgehaltbedingte Druckänderungen im Raum bereinigt wird, die mittels eines Hygrometers (10) im Raum (3) gemessen werden.

## Claims

1. System (1) for failure recognition of a pressure sensor (2), which serves to monitor the pressure of a closed space (3) and indicates a falling outside a predetermined pressure range, with an evaluation device for the pressure measurement signal of the pressure sensor, **characterised in that** the monitoring device (6) indicates a failure of the pressure sensor (2) when the pressure measurement signal does not exhibit any daily periodic pressure fluctuation ($\Delta P$) within the said pressure range.

2. System according to claim 1, **characterised in that** the evaluation device (6) also indicates a failure of the pressure sensor (2) when the pressure measurement signal exhibits a daily periodic pressure fluctuation ($\Delta P$), which lies below a predetermined threshold value (S).

3. System according to claim 1 or 2, **characterised in that** it has a barometer (9), which measures changes in atmospheric pressure outside the space (3) and is connected to the evaluation device (6), and that the evaluation device (6) clears the pressure measurement signal of pressure changes related to atmospheric pressure before said evaluation.

4. System according to one of claims 1 to 3, **characterised in that** it has a hygrometer (10), which measures changes in humidity content in the space (3) and is connected to the evaluation device (6), and that the evaluation device (6) clears the pressure measurement signal of pressure changes related to humidity content before said evaluation.

5. System according to one of claims 1 to 4 for a pressure sensor (2), which monitors the double wall interstice of a double-walled tank (4) as space (3), **characterised in that** it has a level sensor (11) for the tank (4), which is connected to the evaluation device (6), and that the evaluation device (6) clears the pressure measurement signal of pressure changes related to filling level before said evaluation.

6. Method for failure recognition of a pressure sensor, which serves to monitor the pressure of a closed space and indicates a departure from a predetermined pressure range, **characterised in that** it is continuously checked whether the pressure measurement signal of the pressure sensor (2) exhibits a daily periodic pressure fluctuation ($\Delta P$) within the said pressure range, and a failure of the pressure sensor (2) is recognised when no further daily periodic pressure fluctuation ($\Delta P$) is detectable.

7. Method according to claim 6, **characterised in that** a failure of the pressure sensor (2) is already recognised when the daily periodic pressure fluctuation ($\Delta P$) falls below a predetermined threshold value (S).

8. Method according to claim 7, **characterised in that** a fraction of the mean value of multiple preceding daily periodic pressure fluctuations is set as threshold value (S).

9. Method according to one of claims 6 to 8, **characterised in that** before said checking the pressure measurement signal is cleared of pressure changes related to atmospheric pressure, which are measured by means of a barometer (9) outside the space (3).

10. Method according to one of claims 6 to 9, **characterised in that** before said checking the pressure measurement signal is cleared of pressure changes related to humidity content in the space, which are measured by means of a hygrometer (10) in the space (3).


**Revendications**

1. Installation (1) servant à détecter une défaillance d'un capteur de pression (2), lequel sert à surveiller la pression d'un espace fermé (3) et indique si ladite pression ne se situe plus dans la plage de pressions prédéfinie, comportant un dispositif d'évaluation pour le signal de mesure de pression du capteur de pression, **caractérisée en ce que** le dispositif d'évaluation (6) indique une défaillance du capteur de pression (2), lorsque le signal de mesure de pression ne présente à l'intérieur de la plage de pressions évoquée aucune fluctuation de pression ($\Delta P$) périodique quotidienne.

2. Installation selon la revendication 1, **caractérisée en ce que** le dispositif d'évaluation (6) indique une défaillance du capteur de pression (2) également lorsque le signal de mesure de pression présente une fluctuation de pression ($\Delta P$) périodique quotidienne, qui se situe sous une valeur seuil (S) prédéfinie.

3. Installation selon la revendication 1 ou 2, **caractérisée en ce qu'**elle présente un baromètre (9) qui mesure des variations de la pression atmosphérique à l'extérieur de l'espace (3) et qui est raccordé au dispositif d'évaluation (6), et **en ce que** le dispositif d'évaluation (6) épure le signal de mesure de pression des variations de pression liées à la pression atmosphérique avant l'évaluation évoquée.

4. Installation selon l'une quelconque des revendications 1 à 3, **caractérisée en ce qu'**elle présente un hygromètre (10) qui mesure des variations de la teneur en humidité dans l'espace (3) et qui est raccordé au dispositif d'évaluation (6), et **en ce que** le dispositif d'évaluation (6) épure le signal de mesure de pression des variations de pression liées à la teneur en humidité avant l'évaluation évoquée.

5. Installation selon l'une quelconque des revendications 1 à 4 pour un capteur de pression (2) qui surveille comme espace (3) l'espace intermédiaire à double paroi d'un réservoir à double paroi (4), **caractérisée en ce que** ladite installation présente un capteur de niveau (11) pour le réservoir (4), lequel capteur est raccordé au dispositif d'évaluation (6), et **en ce que** le dispositif d'évaluation (6) épure le signal de mesure de pression des variations de pression liées au niveau avant l'évaluation évoquée.

6. Procédé servant à détecter une défaillance d'un capteur de pression, lequel sert à surveiller la pression d'un espace fermé et indique si ladite pression ne se situe plus dans la plage de pressions prédéfinie, **caractérisé en ce qu'**on vérifie continuellement si le signal de mesure de pression du capteur de pression (2) présente à l'intérieur de ladite plage de pressions une fluctuation de pression ($\Delta P$) périodique quotidienne, et **en ce qu'**une défaillance du capteur de pression (2) est détectée lorsqu'il n'est plus possible de constater une fluctuation de pression ($\Delta P$) périodique quotidienne.

7. Procédé selon la revendication 6, **caractérisé en ce qu'**on détecte alors déjà une défaillance du capteur de pression (2) lorsque la fluctuation de pression ($\Delta P$) périodique quotidienne chute sous une valeur seuil (S) prédéfinie.

8. Procédé selon la revendication 7, **caractérisé en ce qu'**une fraction de la valeur moyenne de plusieurs fluctuations de pression périodiques quotidiennes antérieures est déterminée comme étant une valeur seuil (S).

9. Procédé selon l'une quelconque des revendications 6 à 8, **caractérisé en ce que** le signal de mesure de pression est épuré des variations de pression liées à la pression atmosphérique avant le contrôle évoqué, lesquelles variations de pression sont mesurées à l'extérieur de l'espace (3) au moyen d'un baromètre (9).

**10.** Procédé selon l'une quelconque des revendications 6 à 9, **caractérisé en ce que** le signal de mesure de pression est épuré des variations de pression liées à la teneur en humidité dans l'espace avant le contrôle évoqué, lesquelles variations de pression sont mesurées dans l'espace (3) au moyen d'un hygromètre (10).

*Fig. 1*

*Fig. 2*

*Fig. 3*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4216937